# EUROPÄISCHE PATENTSCHRIFT

(11) **EP 1 809 922 B1**
(45) Veröffentlichungstag und Bekanntmachung des Hinweises auf die Patenterteilung: **11.03.2009**
(21) Anmeldenummer: 05797041.0
(22) Anmeldetag: 28.09.2005
(51) Int. Cl.: F16F 9/084, B60G 15/12

(54) **LUFTFEDER-DÄMPFER-MODUL**
PNEUMATIC SPRING ABSORBER MODULE
MODULE D'AMORTISSEMENT PNEUMATIQUE

(30) Priorität: 04.11.2004 DE 102004053256
(43) Veröffentlichungstag der Anmeldung: 25.07.2007
(73) Patentinhaber: ContiTech Luftfedersysteme GmbH, 30165 Hannover (DE)
(72) Erfinder: STAHMER, Reinhard, 30823 Garbsen (DE)
(74) Vertreter: Finger, Karsten
(86) Internationale Anmeldenummer: PCT/EP2005/010464
(87) Internationale Veröffentlichungsnummer: WO 2006/048085

(56) Entgegenhaltungen:
- EP-A- 0 318 696
- DE-C1- 10 024 983
- DE-C2- 19 755 549
- US-B1- 6 286 820

## Beschreibung

Die Erfindung betrifft ein Luftfeder-Dämpfer-Modul, umfassend
- einen Stoßdämpfer
   - mit einem Außenrohr mit einem Verschluss an einem in Einbaulage nach oben weisenden oberen Ende des Stoßdämpfers,
   - mit einem vom oberen Ende des Stoßdämpfers beabstandeten, auf dem Außenrohr fixierten Ringflansch,
   - mit einer Dämpferstange,
- einen auf dem oberen Ende des Stoßdämpfers angeordneten Abrollkolben
   - mit einem Kolbendeckel mit einer äußeren und einer inneren Oberfläche und einer zentrischen Öffnung für die Dämpferstange und
   - mit einem Kolbenboden mit einer zentrischen Öffnung
- einen auf dem Abrollkolben angeordneten und auf dem Konussitz fixierten Luftfederbalg mit einer dem Abrollkolben zugeordneten und einer dem Abrollkolben abgewandten Öffnung,
- eine den Luftfederbalg an der dem Abrollkolben abgewandten Öffnung verschließende Verschlussplatte,
- einen im Inneren des Luftfederbalges angeordneten Anschlagpuffer aus elastomerem Werkstoff,
wobei der Abrollkolben mit der Öffnung im Kolbenboden über das obere Ende des Stoßdämpfers gestülpt ist und der Kolbenboden sich über den Ringflansch auf dem Außenrohr des Stoßdämpfers abstützt.

Derartige Luftfeder-Dämpfer-Module sind vorwiegend als Federbeine an der Vorderachse in Nutzfahrzeugen im Einsatz. Durch die koaxiale, ineinander gesteckte Anordnung von Luftfeder und Stoßdämpfer in einem Luftfeder-Dämpfer-Modul lässt sich der notwendige Einbauraum für die Federung und Dämpfung im Nutzfahrzeug verringern, was einer breiteren Federspur und einem größeren Lenkwinkel zugute kommt. Der Luftfederbalg mit Verschlussplatte und Abrollkolben wirkt dabei wie eine an sich bekannte Luftfederung, das Wirkprinzip des Stoßdämpfers entspricht ebenfalls dem bekannten Stand der Technik. Die Stoßdämpfer sind häufig an ihrem in Einbaulage nach oben weisenden Ende mit einem Deckel verschlossen, der durch eine Verrollung des Außenrohres des Stoßdämpfers nach innen über den Deckel dicht in Position gehalten wird. Die Verrollung ist eine rein formschlüssige Verbindung von Außenrohr und Deckel. Sie ist deshalb gegen Biegewechselbeanspruchung und plastische Verformung besonders empfindlich.

Bei einer typischen Ausführungsform derartiger Luftfeder-Dämpfer-Module weist der Abrollkolben zusätzlich eine Pufferstütze auf, die innerhalb des Abrollkolbens über das obere Ende des Stoßdämpfers gestülpt ist und sich ebenfalls auf dem Ringflansch des Stoßdämpfers abstützt. Der Anschlagpuffer oder eine Zusatzfeder, welche in oder an der Verschlussplatte des Luftfederbalges angeordnet sind, schlägt, beispielsweise im Falle eines Durchschlagens der Luftfeder, auf einer am oberen Ende der Pufferstütze fixierten Prallplatte auf. Diese Konstruktion dient dazu, den Abrollkolben bei großen Lasten vor zu starker Verformung und die Verrollung des Stoßdämpfers vor zu großen Lasten zu schützen. Nachteilig dabei ist, dass derartige Abrollkolben aufwendig, schwer und dementsprechend kostenintensiv sind.

Die DE 197 55 549 C2 beschreibt ein Luftfeder-Dämpfer-Modul, bei dem der Abrollkolben plan auf dem oberen Ende des Stoßdämpfers aufliegt. Die gesamte Federkraft und im Falle eines Kontaktes des Anschlagpuffers mit dem Kolbendeckel auch die gesamte Pufferkraft stützt sich also auf dem oberen Ende des Stoßdämpfers und der dort angeordneten Verrollung des Außenrohres ab. Ein Ringflansch am Außenrohr ist hier nicht vorhanden.

Bei dieser Lösung ist der Verschluss des Außenrohres des Stoßdämpfers sehr hohen Belastungen ausgesetzt. Ist der Verschluss als Verrollung ausgebildet, kommt es wegen der besonderen Empfindlichkeit der Verrollung gegenüber Biegewechselbeanspruchung leicht zu Undichtigkeiten und abnehmender Dämpferleistung.

Die DE 100 24 983 C1 zeigt eine Lösung, bei der der Abrollkolben vom oberen Ende des Stoßdämpfers beabstandet in nicht näher bezeichneter Weise fixiert ist und die Pufferkraft durch eine Schutzabdeckung auf dem verrollten Ende des Stoßdämpfers abgefangen wird. Damit die Schutzabdeckung sich im Betrieb nicht löst und um den Kontakt mit der Verrollung des Außenrohres zuverlässig zu verhindern, muss die Schutzabdeckung fest mit dem Außenrohr verbunden sein. In der vorgeschlagenen Lösung ist die Montage der Schutzabdeckung auf das Außenrohr erst nach der Montage des Abrollkolbens am Stoßdämpfer möglich. Eine Demontage des Stoßdämpfers, beispielsweise zum Austausch, ist hier durch die fest angebrachte Schutzabdeckung stark erschwert oder unmöglich.

Die EP0318696 A zeigt ein weiteres Luftfeder-Dämpfer-Modul mit den Merkmalen des Oberbegriffs des Anspruchs 1.

Der Erfindung liegt die Aufgabe zugrunde, ein konstruktiv vereinfachtes Luftfeder-Dämpfer-Modul der eingangs geschilderten Art zu schaffen, bei dem der Verschluss des Stoßdämpfers vor hohen Belastungen geschützt ist und das eine leichte Montier- und Demontierbarkeit von Stoßdämpfer und Abrollkolben ermöglicht.

Diese Aufgabe wird dadurch gelöst, dass im Betriebszustand des Luftfeder-Dämpfer-Moduls der Abrollkolben so auf dem Stoßdämpfer angeordnet ist, dass die innere Oberfläche des Kolbendeckels und der Verschluss des Stoßdämpfers durch einen Spalt beabstandet sind, wobei erst bei Auftreffen des Anschlagpuffers auf den Kolbendeckel und Überschreiten einer dabei auftretenden vorbestimmten Last auf den Kolbendeckel die innere Oberfläche des Kolbendeckels auf dem Verschluss des Stoßdämpfers aufsetzt.

Durch den Spalt zwischen innerer Oberfläche des Kolbendeckels und Stoßdämpfer wird der Verschluss im Normalbetrieb überhaupt nicht durch die Luftfeder belastet. Alle Kräfte werden über den Abrollkolben auf den Ringflansch des Außenrohres des Stoßdämpfers übertragen. Bei Kontakt des Anschlagpuffers mit dem Kolbendeckel verformt sich zunächst der Abrollkolben elastisch, so dass der Spalt kleiner wird. Bei Überschreiten einer bestimmten Last setzt die innere Oberfläche des Kolbendeckels auf dem oberen Ende des Stoßdämpfers auf. Erst jetzt muss der Verschluss des Stoßdämpfers Kräfte aufnehmen, die gegenüber dem Stand der Technik um den Betrag kleiner sind, den der Kolbendeckel an Kräften aufnimmt. Besonders vorteilhaft ist dies, wenn der Verschluss des Stoßdämpfers mit einer Verrollung ausgeführt ist, da diese durch die erfindungsgemäße Lösung weitgehend vor beschädigenden Belastungen geschützt ist.

In einer weiteren Ausbildung der Erfindung ist auf der dem Anschlagpuffer abgewandten inneren Oberfläche des Kolbendeckels zentrisch ein napfförmiger Zentrierflansch mit einer dem Kolbendeckel zugewandten, konischen Bodenringfläche und einer konischen, über den Stoßdämpfer stülpbaren Zarge fixiert, wobei Abrollkolben und Stoßdämpfer so zueinander angeordnet sind, dass in unbelastetem Zustand des Luftfeder-Dämpfer-Moduls der Zentrierflansch und der Verschluss des Stoßdämpfers durch einen Spalt beabstandet sind, wobei erst bei einer vorbestimmten Last der Zentrierflansch auf dem Verschluss des Stoßdämpfers aufsetzt.

Der Zentrierflansch erleichtert den Zusammenbau von Stoßdämpfer und Abrollkolben. Der Stoßdämpfer lässt sich einfach in den Abrollkolben einführen und wird an seinem oberen Ende durch die konische Zarge des Zentrierflansches geführt. Dadurch wird ein Ausknicken des Luftfeder-Dämpfer-Moduls an der Verbindung von Abrollkolben und Stoßdämpfer verhindert. Der Zentrierflansch ist ein einfaches, leichtes Bauteil und bereits bei der Herstellung des Abrollkolbens einfach anbringbar. Somit entfällt ein zusätzlicher Montageschritt. Der Zentrierflansch muss nicht auf dem Außenrohr des Stoßdämpfers fixiert werden, was eine einfache Montage und Demontage des Stoßdämpfers ermöglicht.

Gemäß einer weiteren Ausbildung der Erfindung ist der Zentrierflansch als Ausstülpung des Kolbendeckels direkt aus dem Material des Kolbendeckels ausgeformt.

Diese Anordnung hat den Vorteil, dass kein separater Arbeitsgang zur Befestigung des Zentrierflansches am Kolbendeckel notwendig ist.

Eine weitere Ausbildung der Erfindung ist dadurch gekennzeichnet, dass der Kolbendeckel mindestens teilweise als zentrische konkave Pufferanschlagfläche so ausgebildet ist, dass beim Auftreffen des Anschlagpuffers auf die Pufferanschlagfläche Abrollkolben und Anschlagpuffer zentrisch zueinander ausgerichtet sind.

Der Vorteil dieser Anordnung liegt darin, dass der Anschlagpuffer durch die konkave Pufferanschlagfläche geführt wird. Dadurch ist die Gefahr des Ausknickens des Luftfeder-Dämpfer-Moduls, beispielsweise durch außermittige Belastungen reduziert.

In einer weiteren Ausführungsform der Erfindung ist auf dem oberen Ende des Stoßdämpfers eine Stoßdämpfer-Schutzabdeckung aufgesteckt, wobei der Abrollkolben so auf dem Stoßdämpfer angeordnet ist, dass die innere Oberfläche des Kolbendeckels und die Stoßdämpfer-Schutzabdeckung durch einen Spalt beabstandet sind, wobei erst bei Auftreffen des Anschlagpuffers auf den Kolbendeckel und Überschreiten einer dabei auftretenden vorbestimmten Last auf den Kolbendeckel die innere Oberfläche des Kolbendeckels auf der Stoßdämpfer-Schutzabdeckung aufsetzt.

Die Stoßdämpfer-Schutzabdeckung an sich ist bekannt. Die erfindungsgemäße Lösung hat jedoch den Vorteil, dass erst bei Überschreiten einer bestimmten Last die innere Oberfläche des Kolbendeckels auf der Stoßdämpfer-Schutzabdeckung aufsetzt und diese erst dann Kräfte aufnehmen muss. Diese Kräfte werden aufgrund der Führung der Stoßdämpfer-Schutzabdeckung durch das Stoßdämpfer-Außenrohr gleichmäßig auf den Verschluss des Stoßdämpfers übertragen. Punktförmige Belastungen des Verschlusses werden so vermieden. Außerdem stützt sich die Stoßdämpfer-Schutzabdeckung am Außenrohr des Stoßdämpfers ab, so dass durch die zwischen Schutzabdeckung und Außenrohr herrschende Reibung ein Teil der auf die Schutzabdeckung wirkenden Kräfte aufgenommen wird. Damit ist eine besonders gute Schonung des Stoßdämpferverschlusses gegeben. Durch einen gegenüber dem Stand der Technik verringerten Durchmesser der Schutzabdeckung ist die Demontierbarkeit des Kolbens sichergestellt.

In einer weiteren Ausführung der Erfindung weist die Stoßdämpfer-Schutzabdeckung einen in Einbaulage nach oben weisenden zentrischen Zentrierbund auf, der so angeordnet ist, dass er zwischen der Dämpferstange und dem Kolbendeckel vertikal in die Öffnung des Kolbendeckels eingreift.

Der Vorteil dieses Bundes ist, dass die Stoßdämpfer-Schutzabdeckung und damit der Stoßdämpfer gegenüber dem Abrollkolben zentrisch geführt ist. Dadurch ist die Gefahr des Ausknickens des Luftfeder-Dämpfer-Moduls im Belastungsfall verringert.

Anhand der Zeichnung werden nachstehend drei Ausführungsbeispiele der Erfindung näher erläutert. Es zeigt
- Fig. 1: ein erfindungsgemäßes Luftfeder-Dämpfer-Modul in montiertem Zustand als Teil- längsschnitt,
- Fig. 2: eine Ausschnittvergrößerung des Kolbendeckelbereiches des Luftfeder-Dämpfer- Moduls in unbelastetem Zustand als Teillängsschnitt,
- Fig. 3: eine Ausschnittvergrößerung des Kolbendeckelbereiches eines Luftfeder-Dämpfer- Moduls mit Stoßdämpfer-Schutzabdeckung in unbelastetem Zustand als Teillängs- schnitt und
- Fig. 4: eine Ausschnittvergrößerung des Kolbendeckelbereiches eines Luftfeder-Dämpfer- Moduls mit Stoßdämpfer-Schutzabdeckung mit Zentrierbund in unbelastetem Zu- stand als Teillängsschnitt

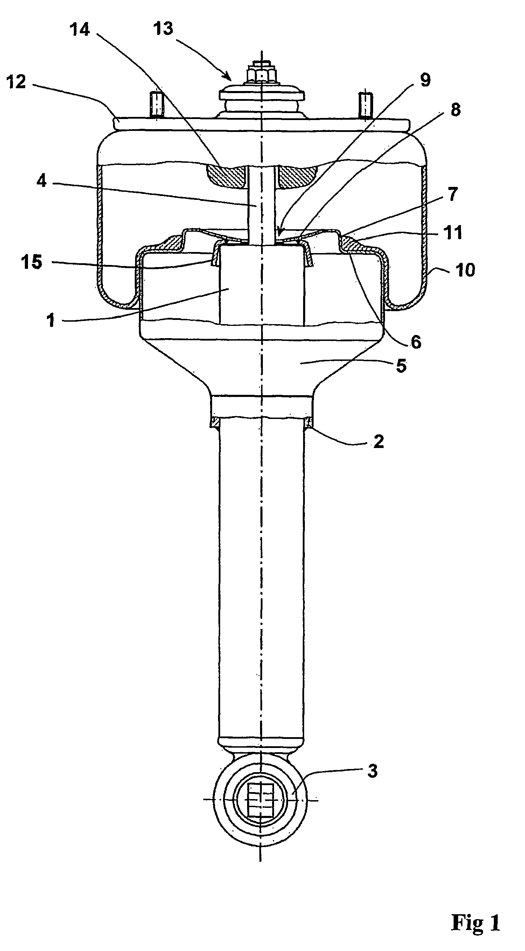

Das in Fig. 1 gezeigte erfindungsgemäße Luftfeder-Dämpfer-Modul weist einen Stoßdämpfer 1 mit einem Ringflansch 2, ein Auge 3 zur Befestigung des Stoßdämpfers 1 an einem Fahrwerk einer Nutzfahrzeugkarosserie und eine Dämpferstange 4 auf. Das Fahrwerk und die Nutzfahrzeugkarosserie sind hier nicht gezeigt. Auf dem oberen Ende des Stoßdämpfers 1 ist ein Abrollkolben 5 aufgesetzt, der sich auf dem Ringflansch 2 abstützt. Der Abrollkolben 5 weist einen Kolbendeckel 6 auf. Zentrisch im Kolbendeckel 6 ist ein Konussitz 7 angeordnet, wobei der Konussitz 7 eine ins Kolbeninnere konkav gewölbte gelochte Pufferanschlagfläche 8 aufweist. Durch das Loch 9 ist die Dämpferstange 4 durch die Pufferanschlagfläche 8 hindurchgeführt.

Auf dem Konussitz 7 ist ein Luftfederbalg 10 aufgesetzt, der auf dem Abrollkolben 5 abrollt und mit einem Dichtwulst 11 eine luftdichte Verbindung zwischen Abrollkolben 5 und Luftfederbalg 10 bildet. Der Luftfederbalg 10 ist an seinem oberen Ende mit einer Verschlussplatte 12 luftdicht verschlossen. Mittig in der Verschlussplatte 12 ist ein Stoßdämpferlager 13 angeordnet, an dem die Kolbenstange 4 des Stoßdämpfers 1 befestigt ist. An der Verschlussplatte 12 ist außerdem ein in das Innere des Luftfederbalges 10 weisender Anschlagpuffer 14 befestigt. Der Anschlagpuffer dient dazu, bei hohen Belastungen des Luftfeder-Dämpfer-Moduls einen direkten Kontakt der Verschlussplatte 12 mit dem Abrollkolben 5 zu verhindern. Federt der Luftfederbalg 10 über die betriebsgemäße Einfederung hinaus ein, trifft der Anschlagpuffer 14 auf die Pufferanschlagfläche 8 des Abrollkolbens 5. Auf der Unterseite der Pufferanschlagfläche 8 ist ein Zentrierflansch 15 angeschweißt.

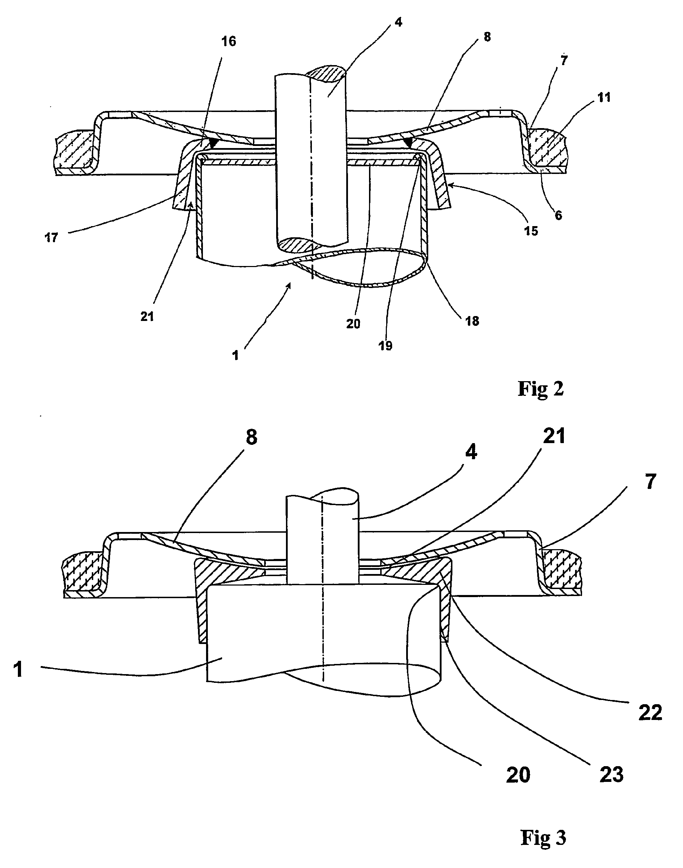

In Fig. 2 ist der Deckelbereich des Abrollkolbens 5 im unbelasteten Zustand im Längsschnitt dargestellt. Der Zentrierflansch 15 weist eine Bodenringfläche 16 und eine konische Zarge 17 auf. Die Konizität dient einer erleichterten Montage. Der Stoßdämpfer weist ein Außenrohr 18 und einen Deckel 19 auf. Das Außenrohr 18 ist am oberen Ende durch eine Verrollung 20 gegen den Deckel 19 verschlossen. Zwischen Zentrierflansch 15 und Stoßdämpfer 1 liegt ein Spalt 21. Es besteht in diesem Betriebszustand kein Kontakt zwischen dem Zentrierflansch 15 und der Verrollung 20. Dadurch wird die empfindliche Verrollung 20 im Normalbetrieb des Luftfeder-Dämpfer-Moduls geschont. Erst bei hohen Belastungen federt die Pufferanschlagfläche 8 so weit nach unten durch, dass der Zentrierflansch 15 sich auf dem Außenrohr 18 des Stoßdämpfers 1 abstützt.

In Fig. 3 ist ein weiteres Ausführungsbeispiel eines erfindungsgemäßen Luftfeder-Dämpfer-Moduls im Teillängsschnitt dargestellt. Auf dem oberen Ende des Stoßdämpfers 1 ist eine Stoßdämpfer-Schutzabdeckung 22 fixiert, die auf dem Verschluss 20 des Stoßdämpfers aufliegt und sich um das Außenrohr 18 des Stoßdämpfers 1 herumgreifend axial um eine vorbestimmte Länge erstreckt. Dadurch ist die Schutzabdeckung 22 gegen den Stoßdämpfer 1 axial geführt. Die Schutzabdeckung 22 sitzt stramm auf dem Außenrohr 18 auf, so dass zwischen Außenrohr 18 und Schutzabdeckung 22 eine Reibungszone 23 ausgebildet ist, die in axialer Richtung wirkende Kräfte auf die Schutzabdeckung 22 mindestens teilweise aufnehmen kann. Einerseits werden mit dieser Schutzabdeckung 22 bei Aufsetzen des Kolbendeckels 6 auf die Schutzabdeckung 22 auftretende Kräfte auf den Verschluss 20 des Stoßdämpfers 1 gut verteilt, andererseits werden diese Kräfte in der Reibungszone 23 zwischen Außenrohr 18 des Stoßdämpfers 1 und Schutzabdeckung 22 reduziert. Dies führt zu einer verbesserten Schonung des Verschlusses 20 des Stoßdämpfers 1. Der Durchmesser der Schutzabdeckung 22 ist kleiner als der Durchmesser der Öffnung im Boden des Abrollkolbens 5, so dass eine Demontierbarkeit des Abrollkolbens 5 vom Stoßdämpfer 1 gegeben ist.

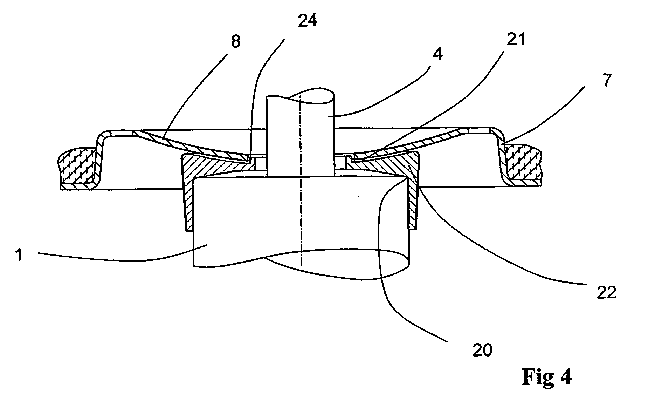

Die Fig. 4 zeigt ein Luftfeder-Dämpfer-Modul ähnlich dem Luftfeder-Dämpfer-Modul aus Fig. 3. Zusätzlich weist in dieser Ausführung die Stoßdämpfer-Schutzabdeckung 22 einen axial nach oben aus der Schutzabdeckung 22 herausragenden Zentrierbund 24 auf, der spielbehaftet zwischen Dämpferstange 4 und Kolbendeckel 6 in die Öffnung 9 des Kolbendeckels 6 hineinragt. Durch diesen Zentrierbund 24 wird die Schutzabdeckung 22 und damit der Stoßdämpfer 1 gegen den Abrollkolben 5 geführt, wodurch ein Ausknicken des Luftfeder-Dämpfer-Moduls bei ggf. auftretenden Querkräften verhindert werden kann.

### Bezugszeichenliste

### (Teil der Beschreibung)

- 1: Stoßdämpfer
- 2: Ringflansch
- 3: Befestigungsauge
- 4: Dämpferstange
- 5: Abrollkolben
- 6: Kolbendeckel
- 7: Konussitz
- 8: Pufferanschlagfläche
- 9: Öffnung in der Pufferanschlagfläche 8
- 10: Luftfederbalg
- 11: Dichtwulst des Luftfederbalges 10
- 12: Verschlussplatte
- 13: Stoßdämpferlager
- 14: Anschlagpuffer
- 15: Zentrierflansch
- 16: Bodenringfläche des Zentrierflansches 15
- 17: Zarge des Zentrierflansches 15
- 18: Außenrohr des Stoßdämpfers 1
- 19: Deckel des Stoßdämpfers 1
- 20: Verschluß des Stoßdämpfers 1
- 21: Spalt
- 22: Stoßdämpfer-Schutzabdeckung
- 23: Reibungszone zwischen Schutzabdeckung 22 und Außenrohr 18
- 24: Zentrierbund

## Patentansprüche

1. Luftfeder-Dämpfer-Modul, umfassend
- einen Stoßdämpfer (1)
- mit einem Außenrohr (18) mit einem Verschluss (20) an einem in Einbaulage nach oben weisenden oberen Ende des Stoßdämpfers (1),
- mit einem vom oberen Ende des Stoßdämpfers (1) beabstandeten, auf dem Außenrohr (18) fixierten Ringflansch (2),
- mit einer Dämpferstange (4),
- einen auf dem oberen Ende des Stoßdämpfers (1) angeordneten Abrollkolben (5)
- mit einem Kolbendeckel (6) mit einer äußeren und einer inneren Oberfläche und einer zentrischen Öffnung (9) für die Dämpferstange (4) und
- mit einem Kolbenboden mit einer zentrischen Öffnung
- einen auf dem Abrollkolben (5) angeordneten und fixierten Luftfederbalg (10) mit einer dem Abrollkolben (5) zugeordneten und einer dem Abrollkolben (5) abgewandten Öffnung,
- eine den Luftfederbalg (10) an der dem Abrollkolben (5) abgewandten Öffnung verschließende Verschlussplatte (12),
- einen im Inneren des Luftfederbalges (10) angeordneten Anschlagpuffer (14) aus elastomerem Werkstoff,
wobei der Abrollkolben (5) mit der Öffnung im Kolbenboden über das obere Ende des Stoßdämpfers (1) gestülpt ist und der Kolbenboden sich über den Ringflansch (2) auf dem Außenrohr (18) des Stoßdämpfers (1) abstützt, wobei
im Betriebszustand des Luftfeder-Dämpfer-Moduls der Abrollkolben (5) so auf dem Stoßdämpfer (1) angeordnet ist, dass die innere Oberfläche des Kolbendeckels (6) und der Verschluss (20) des Stoßdämpfers (1) durch einen Spalt (21) beabstandet sind,
**dadurch gekennzeichnet, dass** erst bei Auftreffen des Anschlagpuffers (14) auf den Kolbendeckel (6) und Überschreiten einer dabei auftretenden vorbestimmten Last auf den Kolbendeckel (6) die innere Oberfläche des Kolbendeckels (6) auf dem Verschluss (20) des Stoßdämpfers (1) aufsetzt.

2. Luftfeder-Dämpfer-Modul nach Anspruch 1, **dadurch gekennzeichnet, dass** auf der dem Anschlagpuffer (14) abgewandten Seite des Kolbendeckels (6) zentrisch ein napfförmiger Zentrierflansch (15) mit einer dem Kolbendeckel (6) zugewandten, konischen Bodenringfläche (16) und einer konischen, über den Stoßdämpfer (1) stülpbaren Zarge (17) fixiert ist, wobei Abrollkolben (5) und Stoßdämpfer (1) so zueinander angeordnet sind, dass in unbelastetem Zustand des Luftfeder-Dämpfer-Moduls der Stoßdämpfer (1) und der Zentrierflansch (15) durch einen Spalt (21) beabstandet sind.

3. Luftfeder-Dämpfer-Modul nach Anspruch 2, **dadurch gekennzeichnet, dass** der Zentrierflansch (15) als Ausstülpung des Kolbendeckels (6) direkt aus dem Material des Kolbendeckels (6) ausgeformt ist.

4. Luftfeder-Dämpfer-Modul nach einem der vorhergehenden Ansprüche, **dadurch gekennzeichnet, dass** der Kolbendeckel (6) mindestens teilweise als zentrische konkave Pufferanschlagfläche (8) so ausgebildet ist, dass beim Auftreffen des Anschlagpuffers (14) auf die Pufferanschlagfläche (8) Abrollkolben (5) und Anschlagpuffer (14) zentrisch zueinander ausgerichtet sind.

5. Luftfeder-Dämpfer-Modul nach einem der vorhergehenden Ansprüche, **dadurch gekennzeichnet, dass** auf dem oberen Ende des Stoßdämpfers (1) eine Stoßdämpfer-Schutzabdeckung (22) aufgesteckt ist, wobei der Abrollkolben (5) so auf dem Stoßdämpfer (1) angeordnet ist, dass die innere Oberfläche des Kolbendeckels (6) und die Stoßdämpfer-Schutzabdeckung (22) durch einen Spalt (21) beabstandet sind, wobei erst bei Auftreffen des Anschlagpuffers (14) auf den Kolbendeckel (6) und Überschreiten einer dabei auftretenden vorbestimmten Last auf den Kolbendeckel (6) die innere Oberfläche des Kolbendeckels (6) auf der Stoßdämpfer-Schutzabdeckung (22) aufsetzt.

6. Luftfeder-Dämpfer-Modul nach Anspruch 5, **dadurch gekennzeichnet, dass** die Stoßdämpfer-Schutzabdeckung (22) einen in Einbaulage nach oben weisenden zentrischen Zentrierbund (24) aufweist, der so angeordnet ist, dass er zwischen der Dämpferstange (4) und dem Kolbendeckel (6) vertikal in die Öffnung (9) des Kolbendeckels (6) eingreift.

## Claims

1. Air spring shock absorber module, comprising
- a shock absorber (1),
- having an external pipe (18) with a closure (20) at an upper end of the shock absorber (1) pointing upward in the installation position,
- having an annular flange (2) which is spaced apart from the upper end of the shock absorber (1) and is secured to the external pipe (18),
- having a shock absorber rod (4),
- a rolling piston (5) which is arranged on the upper end of the shock absorber (1),
- having a piston cover (6) with an external and an internal surface and a central opening (9) for the shock absorber rod (4), and
- having a piston head with a central opening,
- an air spring bellows (10) which is arranged and secured on the rolling piston (5) and has an opening which is assigned to the rolling piston (5) and faces away from the rolling piston (5),
- a closure plate (12) which closes off the air spring bellows (10) at the opening facing away from the rolling piston (5),
- a stop buffer (14) which is arranged in the interior of the air spring bellows (10) and is composed of elastomer material,
wherein the rolling piston (5) is pushed with the opening in the piston head over the upper end of the shock absorber (1) and the piston head is supported by means of the annular flange (2) on the external pipe (18) of the shock absorber (1), wherein in the operating state of the air spring shock absorber module the rolling piston (5) is arranged on the shock absorber (1) in such a way that the internal surface of the piston cover (6) and the closure (20) of the shock absorber (1) are spaced apart by a gap (21), **characterized in that** the internal surface of the piston cover (6) is not fitted onto the closure (20) of the shock absorber (1) until the stop buffer (14) impacts on the piston cover (6) and a predetermined load, occurring in the process, on the piston cover (6) is exceeded.

2. Air spring shock absorber module according to Claim 1, **characterized in that** fixed centrally on that side of the piston cover (6) which faces away from the stop buffer (14) is a cup-shaped centring flange (15) with a conical head ring face (16) which faces the piston cover (6) and a conical border (17) which can be pushed over the shock absorber (1), wherein the rolling piston (5) and the shock absorber (1) are arranged with respect to one another in such a way that in the unloaded state of the air spring shock absorber module the shock absorber (1) and the centring flange (15) are spaced apart by a gap (21).

3. Air spring shock absorber module according to Claim 2, **characterized in that** the centring flange (15) is formed directly from the material of the piston cover (6) as a pushed-out portion of the piston cover (6).

4. Air spring shock absorber module according to one of the preceding claims, **characterized in that** the piston cover (6) is embodied at least partially as a central concave buffer stop face (8) in such a way that when the stop buffer (14) impacts against the buffer stop face (8) the rolling piston (5) and the stop buffer (14) are oriented centrally with respect to one another.

5. Air spring shock absorber module according to one of the preceding claims, **characterized in that** a shock absorber protective cover (22) is plugged onto the upper end of the shock absorber (1), wherein the rolling piston (5) is arranged on the shock absorber (1) in such a way that the internal surface of the piston cover (6) and the shock absorber protective cover (22) are spaced apart by a gap (21), wherein the internal surface of the piston cover (6) is not fitted onto the shock absorber protective cover (22) until the stop buffer (14) impacts on the piston cover (6) and a predetermined load, occurring in the process, on the piston cover (6) is exceeded.

6. Air spring shock absorber module according to Claim 5, **characterized in that** the shock absorber protective cover (22) has a central centring collar (24) which points upward in the installation position and is arranged in such a way that it engages vertically in the opening (9) in the piston cover (6), between the shock absorber rod (4) and the piston cover (6).

## Revendications

1. Module d'amortissement pneumatique, comprenant :
- un amortisseur (1),
- avec un tube extérieur (18) comprenant une fermeture (20) sur une extrémité supérieure de l'amortisseur (1) tournée vers le haut dans la position de montage,
- avec une bride annulaire (2) fixée sur le tube extérieur (18) à distance de l'extrémité supérieure de l'amortisseur (1),
- avec une tige d'amortisseur (4),
- un piston de déroulage (5) disposé à l'extrémité supérieure de l'amortisseur (1),
- avec un couvercle de piston (6) pourvu d'une surface extérieure et d'une surface intérieure et d'une ouverture centrale (9) pour la tige d'amortisseur (4), et
- avec un fond de piston muni d'une ouverture centrale,
- un soufflet pneumatique (10) disposé et fixé sur le piston de déroulage (5), avec une ouverture associée au piston de déroulage (5) et une ouverture opposée au piston de déroulage (5),
- une plaque de fermeture (12) fermant le soufflet pneumatique (10) au niveau de l'ouverture opposée au piston de déroulage (5),
- un tampon de butée (14) disposé à l'intérieur du soufflet pneumatique (10) et constitué d'un matériau élastomère,
le piston de déroulage (5) avec l'ouverture dans le fond de piston étant recourbé par-dessus l'extrémité supérieure de l'amortisseur (1) et le fond de piston s'appuyant par le biais de la bride annulaire (2) sur le tube extérieur (18) de l'amortisseur (1),
le piston de déroulage (5), dans l'état de fonctionnement du module d'amortissement pneumatique, étant disposé sur l'amortisseur (1) de telle sorte que la surface interne du couvercle de piston (6) et que la fermeture (20) de l'amortisseur (1) soient séparées par une fente (21), **caractérisé en ce que** seulement lorsque le tampon de butée (14) vient buter contre le couvercle de piston (6) et qu'une charge prédéterminée ainsi appliquée sur le couvercle de piston (6) est dépassée, la surface intérieure du couvercle de piston (6) se pose sur la fermeture (20) de l'amortisseur (1).

2. Module d'amortissement pneumatique selon la revendication 1, **caractérisé en ce que** sur le côté du couvercle de piston (6) opposé au tampon de butée (14), est fixée centralement une bride de centrage (15) en forme de godet, avec une surface annulaire de fond (16) conique tournée vers le couvercle de piston (6) et un châssis (17) conique, pouvant être replié sur l'amortisseur (1), le piston de déroulage (5) et l'amortisseur (1) étant disposés l'un par rapport à l'autre de telle sorte que dans l'état non sollicité du module d'amortissement pneumatique, l'amortisseur (1) et la bride de centrage (15) soient séparés par une fente (21).

3. Module d'amortissement pneumatique selon la revendication 2, **caractérisé en ce que** la bride de centrage (15) est façonnée sous forme de repli du couvercle de piston (6) directement à partir du matériau du couvercle de piston (6).

4. Module d'amortissement pneumatique selon l'une quelconque des revendications précédentes, **caractérisé en ce que** le couvercle de piston (6) est réalisé au moins en partie sous forme de surface de butée tampon centrale concave (8), **en ce que** lorsque le tampon de butée (14) vient en butée contre la surface de butée tampon (8), le piston de déroulage (5) et le tampon de butée (14) sont orientés centralement l'un par rapport à l'autre.

5. Module d'amortissement pneumatique selon l'une quelconque des revendications précédentes, **caractérisé en ce que** sur l'extrémité supérieure de l'amortisseur (1) est enfoncé un recouvrement de protection de l'amortisseur (22), le piston de déroulage (5) étant disposé de telle sorte sur l'amortisseur (1) que la surface interne du couvercle de piston (6) et que le recouvrement de protection (22) de l'amortisseur soient séparés par une fente (21), et seulement lorsque le tampon de butée (14) vient buter contre le couvercle de piston (6) et qu'une charge prédéterminée ainsi appliquée sur le couvercle de piston (6) est dépassée, la surface intérieure du couvercle de piston (6) se pose sur le recouvrement de protection (22) de l'amortisseur.

6. Module d'amortissement pneumatique selon la revendication 5, **caractérisé en ce que** le recouvrement de protection (22) de l'amortisseur présente un épaulement de centrage (24) central tourné vers le haut dans la position de montage, lequel est disposé de telle sorte qu'il vienne en prise entre la tige d'amortisseur (4) et le couvercle de piston (6) verticalement dans l'ouverture (9) du couvercle de piston (6).
